# FASCICULE DE BREVET EUROPEEN

(11) **EP 4 075 048 B1**
(45) Date de publication et mention de la délivrance du brevet: **03.01.2024**
(21) Numéro de dépôt: 22165379.3
(22) Date de dépôt: 30.03.2022
(51) Int. Cl.: F17C 7/04

(54) **DISPOSITIF DE STOCKAGE ET DE FOURNITURE DE FLUIDE, VÉHICULE ET PROCÉDÉ COMPORTANT UN TEL DISPOSITIF**
VORRICHTUNG ZUM SPEICHERN UND ZUFÜHREN VON FLUIDEN, FAHRZEUG UND VERFAHREN MIT EINER SOLCHEN VORRICHTUNG
DEVICE FOR STORING AND SUPPLYING FLUID, VEHICLE AND METHOD COMPRISING SUCH A DEVICE

(30) Priorité: 13.04.2021 FR 2103778
(43) Date de publication de la demande: 19.10.2022
(73) Titulaire: L'Air Liquide, Société Anonyme pour l'Etude et l'Exploitation des Procédés Georges Claude, 75007 Paris (FR)
(72) Inventeur: ALLIDIERES, Laurent, 75321 PARIS (FR); LOSCO, Jérôme, 38360 SASSENAGE (FR)
(74) Mandataire: Air Liquide

(56) Documents cités:
- EP-A1- 2 813 746
- EP-B1- 1 521 933
- FR-A1- 2 706 822
- US-A- 5 644 921
- US-A1- 2009 288 426
- US-A1- 2015 072 260
- US-A1- 2018 306 383
- US-B2- 9 746 132

## Description

L'invention concerne un dispositif de stockage et de fourniture de fluide, un véhicule et un procédé comportant un tel dispositif.

L'invention concerne plus particulièrement un dispositif de stockage et de fourniture de fluide, notamment dispositif embarqué de stockage et de fourniture d'hydrogène à un organe utilisateur, comprenant un réservoir cryogénique de stockage de fluide liquéfié du type à double parois isolé sous vide comprenant une enveloppe interne délimitant le volume de stockage de fluide et une enveloppe externe disposée autour de l'enveloppe interne avec un espacement d'isolation thermique sous vide entre les deux enveloppes, un circuit de soutirage comprenant une conduite de soutirage comprenant une première extrémité amont reliée à la partie supérieure de l'enveloppe interne et une seconde extrémité aval destinée à être reliée à un organe utilisateur, la conduite de soutirage comprenant un premier échangeur de chaleur de réchauffage situé en dehors de l'enveloppe interne et un second échangeur de chaleur de réchauffage situé à l'intérieur de l'enveloppe interne, le circuit de soutirage comprenant un ensemble de vanne(s) configuré pour assurer le passage d'un flux de fluide circulant de la première extrémité vers la seconde extrémité en passant dans le premier échangeur de chaleur puis dans le second échangeur de chaleur ou en passant dans le premier échangeur de chaleur sans passer dans le second échangeur de chaleur.

Un tel dispositif est par exemple décrit dans le document FR2706822 A1 ou dans le document DE4329566A.

Le stockage d'hydrogène embarqué à bord de véhicules alimentés en carburant hydrogène utilise de l'hydrogène gazeux comprimé ou sous forme liquide.

Si les capacités stockées nécessaires sont supérieures à 50 kg, le stockage embarqué sous forme liquide est privilégié. L'hydrogène liquide est généralement stocké dans un réservoir à basse pression (inférieure à 13 bar abs). À l'équilibre, la température de l'hydrogène est fixée par la pression du réservoir via la courbe de saturation entre la phase liquide et la phase gazeuse. Ceci est valable jusqu'au point critique de l'hydrogène, à une pression légèrement inférieure à 13 bar abs. L'hydrogène liquide est généralement produit à une pression proche de la pression atmosphérique, généralement entre 1,15 et 1,3 bar abs, correspondant à une température comprise entre 20, 8K et 21,2 K. Il est transporté et transféré dans le réservoir embarqué à l'aide de camions cryogéniques et station de remplissage. Le transport et le transfert étant source d'entrées thermique, la température de l'hydrogène dans le réservoir correspond à une pression de saturation de l'ordre de 2 bar abs, soit 22,9K.

Les piles à combustible (ou éventuellement moteurs à combustion interne fonctionnant à hydrogène « ICE ») fonctionnent en général à une pression inférieure à 2 bar abs an niveau du coeur de la cellule. Cependant, pour diverses raisons opératoires, la plupart des fabricants exigent une pression d'interface avec le réservoir qui est comprise entre 3 et 5 bar abs.

Le réservoir plein étant initialement à une pression inférieure, il est alors nécessaire d'augmenter sa pression jusqu'à une pression supérieure à celle de la pile à combustible (ICE) et de contrôler cette pression au fur et à mesure de la consommation de gaz. Il est donc nécessaire d'inclure dans le réservoir un moyen de contrôler sa pression.

Le document précité prévoit un apport de gaz sous pression dans le réservoir. Ceci complexifie l'installation. Ce mode de contrôle n'est pas utilisé dans l'industrie également du fait des quantités de gaz importantes nécessaires.

De plus, dans les dispositifs connus, les agencements relatifs des lignes froides, des lignes chaudes, des échangeurs froids et chauds génèrent des pertes thermiques qui nuisent à l'efficacité de l'installation.

Un but de la présente invention est de pallier tout ou partie des inconvénients de l'art antérieur relevés ci-dessus.

A cette fin, le dispositif selon l'invention, par ailleurs conforme à la définition générique qu'en donne le préambule ci-dessus, est essentiellement caractérisé en ce que l'entrée du premier échangeur de chaleur recevant le flux de fluide provenant de la première extrémité de la conduite de soutirage est située dans l'espacement d'isolation thermique sous vide entre les deux enveloppes.

Par ailleurs, des modes de réalisation de l'invention peuvent comporter l'une ou plusieurs des caractéristiques suivantes :
- au moins une partie du premier échangeur de chaleur qui est adjacente à l'entrée recevant le flux de fluide provenant de la première extrémité de la conduite de soutirage est située dans l'espacement d'isolation thermique sous vide entre les deux enveloppes,
- le premier échangeur de chaleur est logé dans un boîtier d'échangeur dont au moins une portion est située dans l'espacement d'isolation thermique sous vide entre les deux enveloppes,
- le boîtier comprend une première entrée recevant le flux de fluide provenant de la première extrémité du circuit, ladite première entrée étant située dans l'espacement d'isolation thermique sous vide entre les deux enveloppes,
- le boîtier abrite une partie du circuit de soutirage reliant le second échangeur de chaleur à la seconde extrémité, le boîtier comprenant une seconde entrée recevant le flux de fluide provenant du second échangeur, ladite seconde entrée étant située dans l'espacement d'isolation thermique sous vide entre les deux enveloppes,
- le circuit de soutirage comporte un troisième échangeur de chaleur disposé en série en aval du second échangeur de chaleur de sorte que le troisième échangeur de chaleur reçoit le flux ayant transité dans le second échangeur de chaleur,
- le troisième échangeur de chaleur est située en dehors de l'espacement d'isolation thermique sous vide entre les deux enveloppes et notamment au moins en partie à l'extérieur de l'enveloppe externe,
- le premier échangeur de chaleur et le troisième échangeur de chaleur sont logés dans un même boîtier d'échangeur en échange thermique avec au moins un flux de fluide caloporteur,
- l'ensemble de vanne(s) comprend une vanne à trois voies reliées respectivement à une sortie du premier échangeur de chaleur, à une entrée du second échangeur de chaleur et à la seconde extrémité de la conduite de soutirage via une portion du circuit de soutirage formant un bypass du troisième échangeur de chaleur,
- la portion du circuit de soutirage formant un bypass du troisième échangeur de chaleur comprend un organe de limitation du débit tel qu'un orifice calibré,
- le dispositif comprend en outre un système de pressurisation du réservoir comprenant une conduite de pressurisation distincte du circuit de soutirage et comprenant deux extrémités reliées respectivement aux parties supérieure et inférieure de l'enveloppe interne, un échangeur de chaleur de vaporisation et un ensemble de vanne(s) configuré pour permettre le soutirage de liquide du réservoir, son réchauffage dans l'échangeur de chaleur de vaporisation et sa réintroduction dans le réservoir,
- le premier échangeur de chaleur, le troisième échangeur de chaleur et l'échangeur de chaleur de vaporisation sont logés dans le même boîtier d'échangeur,
- le dispositif comporte un contrôleur électronique configuré pour commander tout ou partie de l'ensemble de vanne(s) du dispositif,
- le dispositif comprend une pile à combustible ou un moteur relié(e) au niveau de la seconde extrémité aval.

L'invention concerne également un véhicule, notamment bateau comprenant un dispositif selon l'une quelconque des caractéristiques ci-dessus ou ci-dessous.

L'invention concerne également un procédé de fourniture de fluide à un organe utilisateur, au moyen d'un tel dispositif ou d'un tel véhicule dans lequel l'organe utilisateur est reliée à la seconde extrémité du circuit de soutirage, le procédé comprenant une étape de fourniture de fluide du réservoir à l'organe utilisateur par soutirage de fluide liquéfié du réservoir via la première conduite de soutirage, dans lequel, préalablement à l'étape de fourniture de fluide, si la pression au sein du réservoir est inférieure à un seuil déterminée, le procédé comprend une étape de pressurisation du réservoir via le système de pressurisation du réservoir jusqu'à un niveau de pression déterminé.

L'invention peut concerner également tout dispositif ou procédé alternatif comprenant toute combinaison des caractéristiques ci-dessus ou ci-dessous dans le cadre des revendications.

D'autres particularités et avantages apparaîtront à la lecture de la description ci-après, faite en référence aux figures dans lesquelles :
[Fig. 1] représente une vue schématique et partielle illustrant la structure et le fonctionnement d'un premier exemple de réalisation de l'invention,
[Fig. 2] représente une vue schématique et partielle illustrant la structure et le fonctionnement d'un deuxième exemple de réalisation de l'invention,

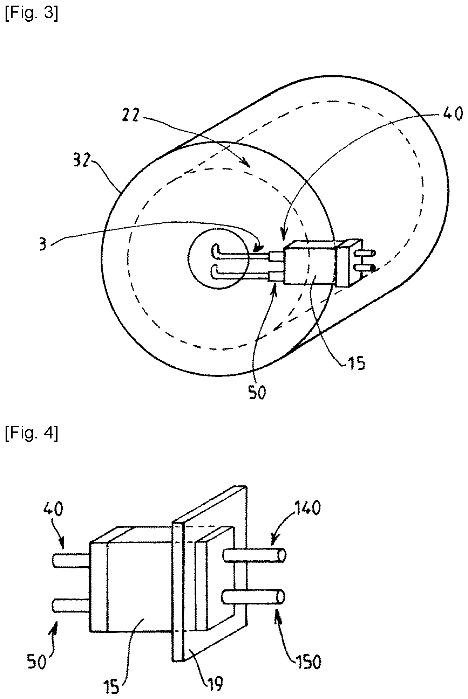

[Fig. 3] représente une vue en perspective et en coupe transversale, schématique et partielle, d'un exemple d'un tel dispositif illustrant l'agencement d'un boîtier d'échangeur de chaleur dans le réservoir,
[Fig. 4] représente une vue en perspective de côté, schématique et partielle, d'un exemple de boîtier d'échangeur de chaleur.

Le dispositif 1 de stockage et de fourniture de fluide illustré peut être un dispositif embarqué sur un véhicule (bateau ou autre) pour le stockage et de fourniture d'hydrogène à un organe utilisateur tel qu'une pile à combustible ou un moteur par exemple.

Le dispositif 1 comprend un réservoir 2 cryogénique de stockage de fluide liquéfié du type à double parois isolé sous vide comprenant une enveloppe interne 22 délimitant le volume de stockage de fluide et une enveloppe 32 externe disposée autour de l'enveloppe 22 interne avec un espacement 42 d'isolation thermique sous vide entre les deux enveloppes.

Le dispositif 1 possède un circuit de soutirage comprenant une conduite 3 de soutirage munie d'une première extrémité 13 amont reliée à l'enveloppe 22 interne (et de préférence au niveau de la partie supérieure) et une seconde extrémité 23 aval destinée à être reliée à un organe utilisateur.

La conduite 3 de soutirage comprend un premier échangeur 4 de chaleur de réchauffage situé en dehors de l'enveloppe interne 22 et un second échangeur 5 de chaleur de réchauffage situé à l'intérieur de l'enveloppe 22 interne.

Le circuit de soutirage comprend en outre un ensemble de vanne(s) 6 configuré pour assurer le passage d'un flux de fluide circulant de la première 13 extrémité vers la seconde 23 extrémité en passant dans le premier échangeur 4 de chaleur puis dans le second échangeur 5 de chaleur ou en passant uniquement dans le premier échangeur 4 de chaleur.

C'est-à-dire que le circuit de soutirage comporte une conduite dans laquelle le premier échangeur 4 de chaleur et le second échangeur 5 de chaleur sont disposés en série entre les première 13 et seconde extrémité 23 et une portion 75 de dérivation reliant la sortie du premier échangeur 4 de chaleur à la seconde extrémité 23 sans passer par le second échangeur 5 de chaleur.

L'ensemble de vanne(s) 6 comprend par exemple une vanne à trois voies reliées respectivement à une sortie du premier échangeur 4 de chaleur, à une entrée du second échangeur 5 de chaleur et à la seconde 23 extrémité via une portion 75 de dérivation assurant un bypass du second échangeur 5 de chaleur.

Cette portion 75 du circuit de soutirage comprend de préférence un organe 70 de limitation du débit tel qu'un orifice calibré ou une vanne par exemple.

La vanne 6 à trois voies peut être du type proportionnel (avec, par exemple, une partie du fluide dirigée vers le second échangeur 5 de chaleur). Bien entendu, tout autre type de vanne(s) peut être envisagé pour assurer le routage ou la répartition des flux de fluide.

L'entrée du premier échangeur 4 (entrée recevant le flux de fluide provenant de la première 13 extrémité de la conduite 3 de soutirage) est située dans l'espacement 42 d'isolation thermique sous vide entre les deux enveloppes.

Ceci permet de localiser les interfaces froides dans l'espace isolé sous vide.

Avantageusement, au moins une partie du premier échangeur 4 de chaleur qui est adjacente à l'entrée 40 recevant le flux de fluide provenant de la première 13 extrémité de la conduite 3 de soutirage est située dans l'espacement 42 d'isolation thermique sous vide. Par exemple un volume peut être prévu à cet effet à une extrémité (par exemple longitudinale) du réservoir (qui peut être un réservoir vertical ou horizontal).

Comme représenté, l'intégralité du premier échangeur 4 de chaleur peut être logée dans cet espace 42 inter-parois.

Par exemple, ce premier échangeur 4 de chaleur peut être logé dans un boîtier 15 d'échangeur étanche dont au moins une portion est située dans l'espacement 42 d'isolation thermique sous vide entre les deux enveloppes.

Le boîtier 15 peut ainsi comprendre une première entrée 40 recevant le flux de fluide provenant de la première extrémité 13 du circuit. Cette première entrée 40 peut être située au niveau d'une extrémité terminale du boîtier 15 située dans l'espacement 42 d'isolation thermique sous vide entre les deux enveloppes.

Comme illustré, ce boîtier 15 peut abriter également une partie du circuit de soutirage reliant le second échangeur 5 de chaleur à la seconde 23 extrémité. A cet effet, le boîtier 15 peut comporter une seconde entrée 50 recevant le flux de fluide provenant du second échangeur 5 de chaleur.

Cette seconde entrée 50 peut être située de façon adjacente à la première entrée 40, dans l'espacement 42 d'isolation thermique sous vide entre les deux enveloppes.

Le circuit de soutirage peut comporter un troisième échangeur 12 de chaleur disposé en série en aval du second échangeur 5 de chaleur de sorte que le troisième échangeur 12 de chaleur reçoit le flux ayant transité dans le second échangeur 5 de chaleur.

Ce troisième échangeur 12 de chaleur est située en dehors de l'espacement 42 d'isolation thermique sous vide entre les deux enveloppes et notamment au moins en partie à l'extérieur de l'enveloppe 32 externe.

Comme illustré, ce troisième échangeur 12 de chaleur peut être logé également dans le boîtier 15. Bien entendu, il pourrait être disposé en dehors du boîtier et notamment plus en aval de ce dernier.

Dans l'exemple représenté le premier échangeur 4 de chaleur et le troisième échangeur 12 de chaleur sont logés dans un même boîtier 15 d'échangeur qui peut être en échange thermique avec au moins un flux 14 de fluide caloporteur.

Ce boîtier 15 peut être un échangeur de chaleur de type à plaques à multicanaux (différents canaux pour les différents échangeurs décrits ci-dessus).

Comme illustré, le dispositif 1 comprend de préférence en outre un système de pressurisation du réservoir 2 ayant une conduite 8 de pressurisation distincte du circuit de soutirage et comprenant deux extrémités reliées respectivement aux parties supérieure et inférieure de l'enveloppe 22 interne. Un échangeur 9 de chaleur de vaporisation et un ensemble de vanne(s) 10, 11 sont prévus sur cette conduite 8 et configurés pour permettre le soutirage de liquide du réservoir 2, son réchauffage dans l'échangeur 9 de chaleur de vaporisation et sa réintroduction dans le réservoir 2. Par exemple deux vannes 10, 11 sont disposées de part et d'autre de l'échangeur 9 de chaleur de vaporisation.

Ainsi, ce système de mise en pression auxiliaire permet la pressurisation initiale du réservoir et notamment le démarrage d'une pile à combustible 123 reliée à la seconde extrémité. Cette pressurisation sans utiliser le circuit de soutirage permet de pressurisation initiale notamment lorsque le pression nécessaire est plus importante que la pression de remplissage, sans consommer de fluide.

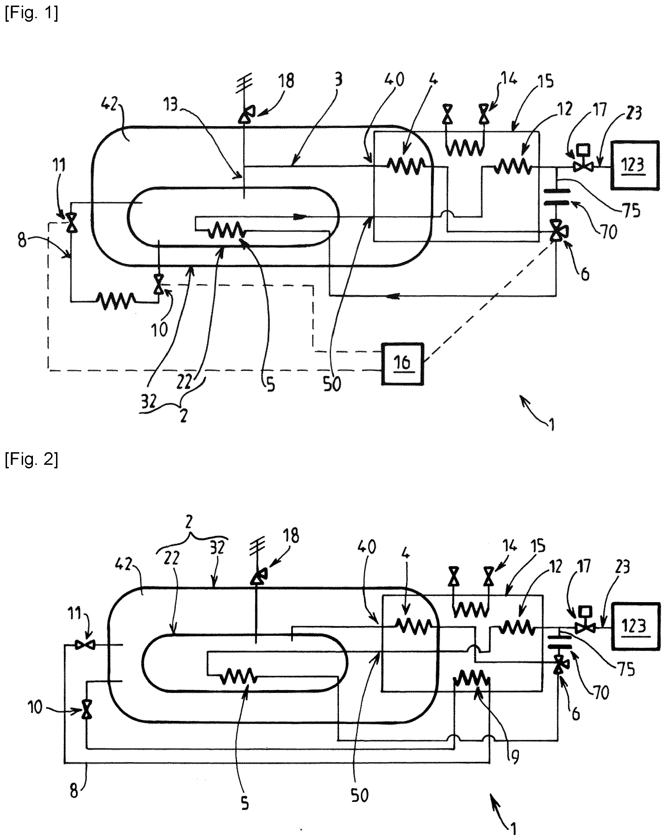

Dans le mode de réalisation de la [Fig.1] le premier échangeur 4 de chaleur est situé en dehors du boîtier 15 précité tandis que dans le mode de réalisation de la [Fig.2] le troisième échangeur 12 de chaleur et l'échangeur 9 de chaleur de vaporisation sont logés dans le même boîtier 15 d'échangeur.

Comme illustré, ce boîtier 15 peut être solidaire d'une plaque 19 de montage qui peut être fixée sur la face externe de l'enveloppe 32 externe. En position montée, ce boîtier 15 peut donc traverser de façon étanche l'enveloppe 32 externe (entrées froide de fluide 40, 50 dans la partie froide isolée sous vide et sorties chaudes 140, 150 à l'extérieur du réservoir).

Une vanne 17 de contrôle et/ou de sécurité est de préférence prévue en aval du troisième échangeur 12 de chaleur au niveau de la seconde extrémité 23 (en amont de l'organe 123 utilisateur). Un capteur de température et/ou de pression peut être prévu également à la sortie de cet échangeur 12 de chaleur (de même qu'au niveau de la première extrémité 13 du circuit de soutirage).

Ainsi, l'ensemble de vanne(s) 6 permet de soutirer du gaz du réservoir 2 qui est mis en circulation dans le premier 4 échangeur de chaleur puis dans le second 5 échangeur de chaleur et ensuite dans le troisième échangeur 12 de chaleur avant la seconde extrémité 23. Alternativement, l'ensemble 6 de vanne(s) permet de soutirer du gaz du réservoir 2 qui est mis en circulation uniquement dans le premier 4 échangeur de chaleur avant d'arriver à la seconde extrémité 23.

Comme indiqué précédemment, un organe 70 de limitation et/ou de régulation de débit est de préférence prévu dans la conduite 3 de soutirage en aval de l'ensemble de vanne(s) (6) et la seconde extrémité (23) aval, dans la portion de bypass du troisième échangeur 12 de chaleur.

Cet organe 70 permet de compenser les pertes de charge le second échangeur 5 de chaleur notamment.

Comme illustré, de préférence, un dispositif 18 de sécurité à clapet de surpression est prévu au niveau de la première extrémité 13 pour évacuer du réservoir 2 d'éventuelles surpressions.

Un fonctionnement possible du dispositif pour alimenter en fluide un organe 123 utilisateur va à présent être décrit.

Lorsque la pression dans le réservoir 2 (dans l'enveloppe interne 22) est inférieure à un seuil déterminé, la vanne 6 trois voies peut être configurée pour faire transiter le fluide soutiré du réservoir 2 (et réchauffé dans le premier échangeur 4 de chaleur) dans le second échangeur 5 de chaleur (pour fournir des calories dans le réservoir 2 et donc augmenter sa pression). Ce fluide est ensuite réchauffé à nouveau dans le troisième échangeur 12 de chaleur avant d'être fourni à l'organe 123 utilisateur.

Lorsque la pression dans le réservoir est supérieure à un niveau déterminé, la vanne 6 trois voies peut être configurée pour faire transiter le fluide soutiré du réservoir 2 (et réchauffé dans le premier échangeur 4 de chaleur) sans passer par le second échangeur de chaleur situé dans le réservoir 2 vers l'utilisateur 123 (via de préférence un organe 70 de limitation de débit).

Dans ce mode, les phases liquides et gazeuses peuvent être maintenues en équilibre thermodynamique.

Ainsi, en régime permanent, le gaz soutiré dans le réservoir 2 provient de l'évaporation de liquide engendré par le second échangeur 5 de chaleur. Ce gaz ayant bullé à travers le liquide présent dans le réservoir, il est à l'équilibre thermodynamique avec le liquide. La pression du réservoir 2 est donc fixée par la température du liquide et du gaz. Ce mode d'opération permet donc d'avoir un réservoir 2 dans lequel le liquide est à la température d'équilibre avec le gaz. Dans ce cas, si le réservoir est secoué, le mélange de la phase liquide et gaz n'influe pas sur sa pression car ils sont à la même température.

Comme illustré, un contrôleur 16 électronique (comprenant un microprocesseur et/ou un ordinateur) peut être prévu et configuré pour commander tout ou partie de l'ensemble de vanne (s) du dispositif.

Ce soutirage au niveau de la partie gazeuse est plus avantageux qu'un soutirage liquide car il permet un meilleur renouvellement de la phase gazeuse. De plus, il limite le gradient thermique de cette phase, et par conséquent minimise l'écart à l'équilibre entre le liquide et les vapeurs des phases.

Le dispositif permet donc un contrôle de la pression du réservoir 2 avec un soutirage gazeux et une boucle de recirculation interne dans la phase liquide le cas échéant. Le dispositif peut être mobile et notamment peut subir des rotations par rapport aux trois axes (Oxyz) supérieures à cinq degrés° et des accélérations selon ces axes supérieures à 0,5 g (qui peuvent causer des mélanges liquide/gaz entraînant potentiellement des instabilités de pression dans les dispositifs de l'art antérieur).

Le dispositif peut être embarqué dans un bateau, avion, camion au niveau d'un poste fixe ou en mode d'utilisation « plein contre vide ».

Le dispositif 1 possède avantageusement un réchauffeur 9 de mise en pression auxiliaire permettant la pressurisation initiale du réservoir et le démarrage de la pile sans soutirage de fluide (avant le mode de fonctionnement de soutirage permanent décrit ci-dessus).

Ainsi, de préférence uniquement pour assurer un démarrage la mise en pression du réservoir 2 est réalisée par le système de pressurisation distinct du circuit de soutirage.

## Revendications

1. Dispositif de stockage et de fourniture de fluide, notamment dispositif embarqué de stockage et de fourniture d'hydrogène à un organe utilisateur, comprenant un réservoir (2) cryogénique de stockage de fluide liquéfié du type à double parois isolé sous vide comprenant une enveloppe interne (22) délimitant le volume de stockage de fluide et une enveloppe (32) externe disposée autour de l'enveloppe (22) interne avec un espacement (42) d'isolation thermique sous vide entre les deux enveloppes, un circuit de soutirage comprenant une conduite (3) de soutirage comprenant une première extrémité (13) amont reliée à la partie supérieure de l'enveloppe (22) interne et une seconde extrémité (23) aval destinée à être reliée à un organe utilisateur, la conduite (3) de soutirage comprenant un premier échangeur (4) de chaleur de réchauffage situé en dehors de l'enveloppe interne (22) et un second échangeur (5) de chaleur de réchauffage situé à l'intérieur de l'enveloppe (22) interne, le circuit de soutirage comprenant un ensemble de vanne(s) (6) configuré pour assurer le passage d'un flux de fluide circulant de la première (13) extrémité vers la seconde (23) extrémité en passant dans le premier échangeur (4) de chaleur puis dans le second échangeur (5) de chaleur ou en passant dans le premier échangeur (4) de chaleur sans passer dans le second échangeur (5) de chaleur, **caractérisé en ce que** l'entrée du premier échangeur de chaleur (4) recevant le flux de fluide provenant de la première (13) extrémité de la conduite (3) de soutirage est située dans l'espacement (42) d'isolation thermique sous vide entre les deux enveloppes.

2. Dispositif selon la revendication 1, **caractérisé en ce que**, au moins une partie du premier échangeur (4) de chaleur qui est adjacente à l'entrée (40) recevant le flux de fluide provenant de la première (13) extrémité de la conduite (3) de soutirage est située dans l'espacement (42) d'isolation thermique sous vide entre les deux enveloppes.

3. Dispositif selon la revendication 1 ou 2, **caractérisé en ce que** le premier échangeur (4) de chaleur est logé dans un boîtier (15) d'échangeur dont au moins une portion est située dans l'espacement (42) d'isolation thermique sous vide entre les deux enveloppes.

4. Dispositif selon la revendication 3, **caractérisé en ce que** le boîtier (15) comprend une première entrée (40) recevant le flux de fluide provenant de la première extrémité (13) du circuit, ladite première entrée (40) étant située dans l'espacement (42) d'isolation thermique sous vide entre les deux enveloppes.

5. Dispositif selon la revendication 3 ou 4, **caractérisé en ce que** le boîtier (15) abrite une partie du circuit de soutirage reliant le second échangeur (5) de chaleur à la seconde (23) extrémité, le boîtier (15) comprenant une seconde entrée (50) recevant le flux de fluide provenant du second échangeur (5), ladite seconde entrée (50) étant située dans l'espacement (42) d'isolation thermique sous vide entre les deux enveloppes.

6. Dispositif selon l'une quelconque des revendications 1 à 5, **caractérisé en ce que** le circuit de soutirage comporte un troisième échangeur (12) de chaleur disposé en série en aval du second échangeur (5) de chaleur de sorte que le troisième échangeur (12) de chaleur reçoit le flux ayant transité dans le second échangeur (5) de chaleur.

7. Dispositif selon la revendication 6, **caractérisé en ce que** le troisième échangeur (12) de chaleur est située en dehors de l'espacement (42) d'isolation thermique sous vide entre les deux enveloppes et notamment au moins en partie à l'extérieur de l'enveloppe (32) externe.

8. Dispositif selon l'une quelconque des revendications 6 ou 7, **caractérisé en ce que** le premier échangeur (4) de chaleur et le troisième échangeur (12) de chaleur sont logés dans un même boîtier (15) d'échangeur en échange thermique avec au moins un flux (14) de fluide caloporteur.

9. Dispositif selon l'une quelconque des revendications 6 à 8, **caractérisé en ce que** l'ensemble de vanne(s) (6) comprend une vanne à trois voies reliées respectivement à une sortie du premier échangeur (4) de chaleur, à une entrée du second échangeur (5) de chaleur et à la seconde (23) extrémité de la conduite de soutirage via une portion (75) du circuit de soutirage formant un bypass du troisième échangeur (12) de chaleur.

10. Dispositif selon la revendication 9, **caractérisé en ce que** la portion (75) du circuit de soutirage formant un bypass du troisième échangeur (12) de chaleur comprend un organe (70) de limitation du débit tel qu'un orifice calibré.

11. Dispositif selon l'une quelconque des revendications 1 à 10, **caractérisé en ce que** le dispositif (1) comprend en outre un système de pressurisation du réservoir (2) comprenant une conduite (8) de pressurisation distincte du circuit de soutirage et comprenant deux extrémités reliées respectivement aux parties supérieure et inférieure de l'enveloppe (22) interne, un échangeur (9) de chaleur de vaporisation et un ensemble de vanne(s) (10, 11) configuré pour permettre le soutirage de liquide du réservoir (2), son réchauffage dans l'échangeur (9) de chaleur de vaporisation et sa réintroduction dans le réservoir (2) .

12. Dispositif selon la revendication 11 prise en combinaison avec l'une des revendications 4 à 6, **caractérisé en ce que** le premier échangeur (4) de chaleur, le troisième échangeur (12) de chaleur et l'échangeur (9) de chaleur de vaporisation sont logés dans le même boîtier (15) d'échangeur.

13. Dispositif selon l'une quelconque des revendications 1 à 12, **caractérisé en ce qu'**il comporte un contrôleur (16) électronique configuré pour commander tout ou partie de l'ensemble de vanne(s) (6) du dispositif.

14. Dispositif selon l'une quelconque des revendications 1 à 13, comprenant une pile à combustible (123) ou un moteur relié(e) au niveau de la seconde extrémité (23) aval.

15. Véhicule, notamment bateau comprenant un dispositif selon l'une quelconque des revendications 1 à 14.

16. Procédé de fourniture de fluide à un organe (123) utilisateur, au moyen d'un dispositif selon l'une quelconque des revendications 1 à 14 ou d'un véhicule selon la revendication 15, dans lequel l'organe utilisateur (123) est reliée à la seconde (23) extrémité du circuit de soutirage, le procédé comprenant une étape de fourniture de fluide du réservoir (2) à l'organe (123) utilisateur par soutirage de fluide liquéfié du réservoir via la première conduite (3) de soutirage, le procédé étant **caractérisé en ce que**, préalablement à l'étape de fourniture de fluide, si la pression au sein du réservoir (2) est inférieure à un seuil déterminée, le procédé comprend une étape de pressurisation du réservoir (2) via le système de pressurisation du réservoir (2) jusqu'à un niveau de pression déterminé.

## Patentansprüche

1. Vorrichtung zum Speichern und zum Zuführen von Fluid, insbesondere eine eingebaute Vorrichtung zum Speichern und zum Zuführen von Wasserstoff zu einer Verbrauchereinheit, beinhaltend einen Kryobehälter (2) zum Speichern von verflüssigtem Fluid vom doppelwandigen, vakuumisolierten Typ, der eine Innenhülle (22), die das Fluidspeichervolumen abgrenzt, und eine Außenhülle (32), die um die Innenhülle (22) herum mit einem Zwischenraum (42) zur Vakuum-Wärmeisolierung zwischen den zwei Hüllen angeordnet ist, beinhaltet, einen Entnahmekreislauf, der eine Entnahmeleitung (3) beinhaltet, die ein stromaufwärtiges erstes Ende (13), das mit dem oberen Teil der Innenhülle (22) verbunden ist, und ein stromabwärtiges zweites Ende (23), das dazu bestimmt ist, mit einer Verbrauchereinheit verbunden zu sein, beinhaltet, wobei die Entnahmeleitung (3) einen ersten Aufheizwärmetauscher (4), der sich außerhalb der Innenhülle (22) befindet, und einen zweiten Aufheizwärmetauscher (5), der sich innerhalb der Innenhülle (22) befindet, beinhaltet, wobei der Entnahmekreislauf einen Satz aus einem oder mehreren Ventilen (6) beinhaltet, der dazu konfiguriert ist, den Durchgang eines Fluidstroms, der von dem ersten Ende (13) zu dem zweiten Ende (23) zirkuliert und dabei den ersten Wärmetauscher (4) und dann den zweiten Wärmetauscher (5) durchläuft oder dabei den ersten Wärmetauscher (4) durchläuft, ohne den zweiten Wärmetauscher (5) zu durchlaufen, zu gewährleisten, **dadurch gekennzeichnet, dass** sich der Einlass des ersten Wärmetauschers (4), der den von dem ersten (13) Ende der Entnahmeleitung (3) kommenden Fluidstrom aufnimmt, in dem Zwischenraum (42) zur Vakuum-Wärmeisolierung zwischen den zwei Hüllen befindet.

2. Vorrichtung nach Anspruch 1, **dadurch gekennzeichnet, dass** sich mindestens ein Teil des ersten Wärmetauschers (4), der an den Einlass (40), der den von dem ersten (13) Ende der Entnahmeleitung (3) kommenden Fluidstrom aufnimmt, angrenzt, in dem Zwischenraum (42) zur Vakuum-Wärmeisolierung zwischen den zwei Hüllen befindet.

3. Vorrichtung nach Anspruch 1 oder 2, **dadurch gekennzeichnet, dass** der erste Wärmetauscher (4) in einem Tauschergehäuse (15) untergebracht ist, von dem sich mindestens ein Abschnitt in dem Zwischenraum (42) zur Vakuum-Wärmeisolierung zwischen den zwei Hüllen befindet.

4. Vorrichtung nach Anspruch 3, **dadurch gekennzeichnet, dass** das Gehäuse (15) einen ersten Einlass (40) beinhaltet, der den von dem ersten Ende (13) des Kreislaufs kommenden Fluidstrom aufnimmt, wobei sich der erste Einlass (40) in dem Zwischenraum (42) zur Vakuum-Wärmeisolierung zwischen den zwei Hüllen befindet.

5. Vorrichtung nach Anspruch 3 oder 4, **dadurch gekennzeichnet, dass** das Gehäuse (15) einen Teil des Entnahmekreislaufs enthält, der den zweiten Wärmetauscher (5) mit dem zweiten (23) Ende verbindet, wobei das Gehäuse (15) einen zweiten Einlass (50) beinhaltet, der den von dem zweiten Tauscher (5) kommenden Fluidstrom aufnimmt, wobei sich der zweite Einlass (50) in dem Zwischenraum (42) zur Vakuum-Wärmeisolierung zwischen den zwei Hüllen befindet.

6. Vorrichtung nach einem beliebigen der Ansprüche 1 bis 5, **dadurch gekennzeichnet, dass** der Entnahmekreislauf einen dritten Wärmetauscher (12) umfasst, der stromabwärts des zweiten Wärmetauschers (5) in Reihe angeordnet ist, sodass der dritte Wärmetauscher (12) den Strom aufnimmt, nachdem dieser den zweiten Wärmetauscher (5) durchquert hat.

7. Vorrichtung nach Anspruch 6, **dadurch gekennzeichnet, dass** sich der dritte Wärmetauscher (12) außerhalb des Zwischenraums (42) zur Vakuum-Wärmeisolierung zwischen den zwei Hüllen und insbesondere mindestens teilweise außerhalb der Außenhülle (32) befindet.

8. Vorrichtung nach einem beliebigen der Ansprüche 6 oder 7, **dadurch gekennzeichnet, dass** der erste Wärmetauscher (4) und der dritte Wärmetauscher (12) in einem gleichen Tauschergehäuse (15) in Wärmeaustausch mit mindestens einem Wärmeträgerfluidstrom (14) untergebracht sind.

9. Vorrichtung nach einem beliebigen der Ansprüche 6 bis 8, **dadurch gekennzeichnet, dass** der Satz aus einem oder mehreren Ventilen (6) ein Dreiwegeventil beinhaltet, das jeweils mit einem Auslass des ersten Wärmetauschers (4), mit einem Einlass des zweiten Wärmetauschers (5) und, über einen Abschnitt (75) des Entnahmekreislaufs, der einen Bypass für den dritten Wärmetauscher (12) bildet, mit dem zweiten (23) Ende der Entnahmeleitung verbunden ist.

10. Vorrichtung nach Anspruch 9, **dadurch gekennzeichnet, dass** der Abschnitt (75) der Entnahmeleitung, der einen Bypass für den dritten Wärmetauscher (12) bildet, einen Durchflussbegrenzer (70), wie etwa eine kalibrierte Öffnung, beinhaltet.

11. Vorrichtung nach einem beliebigen der Ansprüche 1 bis 10, **dadurch gekennzeichnet, dass** die Vorrichtung (1) ferner ein System zur Druckbeaufschlagung des Behälters (2) beinhaltet, das eine Druckbeaufschlagungsleitung (8) beinhaltet, die sich von der Entnahmeleitung unterscheidet, sowie zwei Enden, die jeweils mit dem oberen und unteren Teil der Innenhülle (22) verbunden sind, einen Verdampfungs-Wärmetauscher (9) und einen Satz aus einem oder mehreren Ventilen (10, 11), der dazu konfiguriert ist, die Entnahme von Flüssigkeit aus dem Behälter (2), ihr Wiederaufheizen in dem Verdampfungs-Wärmetauscher (9) und ihre Wiedereinleitung in den Behälter (2) zu ermöglichen, beinhaltet.

12. Vorrichtung nach Anspruch 11 in Kombination mit einem der Ansprüche 4 bis 6, **dadurch gekennzeichnet, dass** der erste Wärmetauscher (4), der dritte Wärmetauscher (12) und der Verdampfungs-Wärmetauscher (9) in dem gleichen Tauschergehäuse (15) untergebracht sind.

13. Vorrichtung nach einem beliebigen der Ansprüche 1 bis 12, **dadurch gekennzeichnet, dass** sie eine elektronische Steuerung (16) umfasst, die dazu konfiguriert ist, den gesamten oder einen Teil des Satzes aus einem oder mehreren Ventilen (6) der Vorrichtung zu steuern.

14. Vorrichtung nach einem beliebigen der Ansprüche 1 bis 13, die eine Brennstoffzelle (123) oder einen Motor beinhaltet, die/der an dem stromabwärtigen zweiten Ende (23) verbunden ist.

15. Fahrzeug, insbesondere Schiff, das eine Vorrichtung nach einem beliebigen der Ansprüche 1 bis 14 beinhaltet.

16. Verfahren zum Zuführen von Fluid zu einer Verbrauchereinheit (123) mit Hilfe einer Vorrichtung nach einem beliebigen der Ansprüche 1 bis 14 oder eines Fahrzeugs nach Anspruch 15, wobei die Verbrauchereinheit (123) mit dem zweiten (23) Ende des Entnahmekreislaufs verbunden ist, wobei das Verfahren einen Schritt des Zuführens von Fluid von dem Behälter (2) zu der Verbrauchereinheit (123) durch Entnahme von verflüssigtem Fluid aus dem Behälter über die erste Entnahmeleitung (3) beinhaltet, wobei das Verfahren **dadurch gekennzeichnet ist, dass** das Verfahren, wenn der Druck innerhalb des Behälters (2) kleiner als eine vorbestimmte Schwelle ist, vor dem Schritt des Zuführens von Fluid einen Schritt zur Druckbeaufschlagung des Behälters (2) über das Druckbeaufschlagungssystem (2) des Behälters bis auf ein vorbestimmtes Druckniveau beinhaltet.

## Claims

1. Fluid supply and storage device, in particular onboard device for storing hydrogen and supplying it to a user member, comprising a cryogenic tank (2) for storing liquefied fluid of the double-wall and vacuum-insulated type comprising an inner jacket (22) delimiting the fluid storage volume and an outer jacket (32) disposed around the inner jacket (22) with a vacuum thermal insulation gap (42) between the two jackets, a withdrawal circuit comprising a withdrawal line (3) comprising a first, upstream end (13) connected to the upper part of the inner jacket (22) and a second, downstream end (23) intended to be connected to a user member, the withdrawal line (3) comprising a first heating heat exchanger (4) located outside the inner jacket (22) and a second heating heat exchanger (5) located inside the inner jacket (22), the withdrawal circuit comprising an assembly of one or more valves (6) that is configured to ensure the passage of a flow of fluid circulating from the first end (13) to the second end (23), in the process entering the first heat exchanger (4) and then the second heat exchanger (5) or in the process entering the first heat exchanger (4) without entering the second heat exchanger (5), **characterized in that** the inlet of the first heat exchanger (4) receiving the flow of fluid coming from the first end (13) of the withdrawal line (3) is located in the vacuum thermal insulation gap (42) between the two jackets.

2. Device according to Claim 1, **characterized in that** at least a part of the first heat exchanger (4) which is adjacent to the inlet (40) receiving the flow of fluid coming from the first end (13) of the withdrawal line (3) is located in the vacuum thermal insulation gap (42) between the two jackets.

3. Device according to Claim 1 or 2, **characterized in that** the first heat exchanger (4) is housed in an exchanger housing (15), at least one portion of which is located in the vacuum thermal insulation gap (42) between the two jackets.

4. Device according to Claim 3, **characterized in that** the housing (15) comprises a first inlet (40) receiving the flow of fluid coming from the first end (13) of the circuit, said first inlet (40) being located in the vacuum thermal insulation gap (42) between the two jackets.

5. Device according to Claim 3 or 4, **characterized in that** the housing (15) accommodates a part of the withdrawal circuit connecting the second heat exchanger (5) to the second end (23), the housing (15) comprising a second inlet (50) receiving the flow of fluid coming from the second exchanger (5), said second inlet (50) being located in the vacuum thermal insulation gap (42) between the two jackets.

6. Device according to any one of Claims 1 to 5, **characterized in that** the withdrawal circuit has a third heat exchanger (12) disposed in series downstream of the second heat exchanger (5) such that the third heat exchanger (12) receives the flow that has passed into the second heat exchanger (5).

7. Device according to Claim 6, **characterized in that** the third heat exchanger (12) is located outside the vacuum thermal insulation gap (42) between the two jackets and in particular at least partially outside the outer jacket (32).

8. Device according to either one of Claims 6 and 7, **characterized in that** the first heat exchanger (4) and the third heat exchanger (12) are housed in one and the same exchanger housing (15) in a heatexchange relationship with at least one flow (14) of heat-transfer fluid.

9. Device according to any one of Claims 6 to 8, **characterized in that** the assembly of one or more valves (6) comprises a three-way valve, the ports of which are connected respectively to an outlet of the first heat exchanger (4), to an inlet of the second heat exchanger (5), and to the second end (23) of the withdrawal line via a portion (75) of the withdrawal circuit forming a bypass of the third heat exchanger (12).

10. Device according to Claim 9, **characterized in that** the portion (75) of the withdrawal circuit forming a bypass of the third heat exchanger (12) comprises a flow rate limiting member (70), such as a calibrated orifice.

11. Device according to any one of Claims 1 to 10, **characterized in that** the device (1) moreover comprises a system for pressurizing the tank (2), comprising a pressurization line (8) separate from the withdrawal circuit and comprising two ends connected respectively to the upper part and the lower part of the inner jacket (22), a vaporization heat exchanger (9) and an assembly of one or more valves (10, 11) that is configured to allow liquid to be withdrawn from the tank (2), to be heated in the vaporization heat exchanger (9) and to be reintroduced into the tank (2).

12. Device according to Claim 11 taken in combination with one of Claims 4 to 6, **characterized in that** the first heat exchanger (4), the third heat exchanger (12) and the vaporization heat exchanger (9) are housed in the same exchanger housing (15).

13. Device according to any one of Claims 1 to 12, **characterized in that** it has an electronic controller (16) configured to control all or some of the assembly of one or more valves (6) of the device.

14. Device according to any one of Claims 1 to 13, comprising a fuel cell (123) or a motor connected at the second, downstream end (23).

15. Vehicle, in particular boat, comprising a device according to any one of Claims 1 to 14.

16. Method for supplying fluid to a user member (123), by means of a device according to any one of Claims 1 to 14 or a vehicle according to Claim 15, wherein the user member (123) is connected to the second end (23) of the withdrawal circuit, the method comprising a step of supplying fluid from the tank (2) to the user member (123) by withdrawing liquefied fluid from the tank via the first withdrawal line (3), the method being **characterized in that**, prior to the fluid supplying step, if the pressure within the tank (2) is less than a determined threshold, the method comprises a step of pressurizing the tank (2) via the system for pressurizing the tank (2) up to a determined pressure level.
